# EUROPEAN PATENT APPLICATION

(11) **EP 0 552 043 A1**
(43) Date of publication of application: **21.07.1993**
(21) Application number: 93300243.8
(22) Date of filing: 15.01.1993
(51) Int. Cl.: G01F 11/28, G01F 11/02

(54) **Dispensing device**

(30) Priority: 15.01.1992 ZA 920281; 26.05.1992 ZA 923843
(71) Applicant: Kalabakas, Peter, Bertrams, Johannesburg, Transvaal Province (ZA)
(72) Inventor: Kalabakas, Peter, Bertrams, Johannesburg, Transvaal Province (ZA)
(74) Representative: Waldren, Robin Michael

(57) **Abstract**

A dispensing device (10) for dispensing a measured volume of liquid from a body of liquid (25) contained in a reservoir (24), includes a receptacle (14) for receiving an unmeasured excess volume of liquid from the body of liquid (25) and a conduit (42) to connect the reservoir (24) to the receptacle (14). The conduit (42) permits liquid to flow from the body of liquid (25) into the receptacle (14). The device (10) further includes pressure differentiating means for creating a pressure differential between the reservoir (24) and the receptacle (14) to cause liquid to flow from the body of liquid (25) in the reservoir (24) to the receptacle (14), and volume adjustment means to adjust the unmeasured excess volume of liquid in the receptacle (14), to the measured volume. The pressure differentiating means is provided by the receptacle (14) and a lid (12) provided for the receptacle (14) and the reservoir (24).

## Description

This invention relates to a dispensing device. More particularly the invention relates to a dispensing device for dispensing a measured volume of a liquid from a body of liquid contained in a reservoir.

In a particular application the invention relates to a dispensing device suitable to be provided on a bottle for dispensing a measured dose or tot of the liquid contents of the bottle, which may be a liquid pharmaceutical or medicinal formulation, an alcoholic beverage, eg a distilled alcoholic liquor, a liquid concentrate, or the like.

According to the invention there is provided a dispensing device for dispensing a measured volume of liquid from a body of liquid contained in a reservoir, the device including
a receptacle for receiving an unmeasured excess volume of liquid from the body of liquid;
a conduit to connect the reservoir to the receptacle to permit liquid to flow from the body of liquid into the receptacle;
pressure differentiating means for creating a pressure differential between the reservoir and the receptacle to cause liquid to flow from the body of liquid in the reservoir to the receptacle;
volume adjustment means to adjust the unmeasured excess volume of liquid in the receptacle to the measured volume;

The volume adjustment means may be of a kind which, in use, permits excess liquid to return to the reservoir. The dispensing device may, further, include flow prevention means for preventing further flow of liquid between the reservoir and the receptacle when the measured volume is dispensed from the receptacle.

The reservoir may be in the form of a container for the liquid, the container having an outlet. The dispensing device may be engageable with the outlet of the container, and the receptacle may form part of a closure member for closing the outlet of the container, and the conduit may pass through a wall of the closure member to interconnect the container and the receptacle. In a preferred embodiment, the dispensing device may be intended to be used with a reservoir in the form of a bottle constituting the container, the bottle having a wider base portion with a base and a narrower neck portion with a neck defining an outlet, the receptacle being configured so that at least a portion of it forms a closure member for closing the outlet, with the conduit interconnecting the container and the receptacle.

The bottle may be, for example, a medicine bottle, or a bottle for an alcoholic beverage such as a distilled alcoholic liquor. The bottle may typically be made of glass or of a synthetic plastics material.

At least a portion of the receptacle may be configured so that it can form a stopper, for insertion into the neck of the bottle to close off the outlet sealingly.

The stopper may be provided with at least one gripping formation, such as an outwardly bulging side wall or one or more resilient ridges or outwardly directed resilient protuberances, for engagement with the neck of the bottle to impede or hinder withdrawal of the device from the neck of the bottle once the stopper has been inserted into the neck of the bottle.

The receptacle may be generally cup-shaped having an operatively generally upwardly and outwardly extending side wall with an outer surface, the wall defining a narrower lower portion, with a transverse base wall, and a wider upper portion with an open upper end, the narrower lower portion forming the stopper. The lower portion of the cup-shaped receptacle may thus, in use, be positioned, like a stopper, within the neck of a container in the form of a bottle. The receptacle may be of stepped configuration, the narrower lower portion being separated from the wider upper portion by an annular shoulder.

The open upper end of the cup-shaped receptacle may be provided with a closure element or lid for closing off the open upper end of the receptacle, the lid being provided with engagement means for engagement with the neck of the bottle. The lid may be arranged to function as part of the pressure differentiating means, as explained in more detail below. The lid may further engage with an outer face of the neck of the container in the form of a bottle, eg by means of complementary screw threads, to serve as a closure lid for the bottle. The engagement means may thus be a screw thread for engagement with a complementary screw thread provided on the neck of the bottle.

The pressure differentiating means may be a pressure reduction means for reducing the pressure inside the receptacle. The arrangement may be such that in operation, a reduction in pressure in the receptacle will cause the liquid in the container to be drawn by suction through the conduit from the container into the receptacle, the conduit passing through the base wall of the receptacle, as indicated above.

The lid of the receptacle and the receptacle itself may together constitute the pressure reduction means, the lid and the receptacle being arranged in sealing relationship relative to one another to define between them a closed cavity, and being capable of relative displacement in a manner to enlarge the volume of said cavity to cause a reduction of pressure in the said cavity. For example, the closure lid may be hollow, having an inner surface, and may fit, in use, over the receptacle so that at least a portion of the outer surface of the side wall of the receptacle abuts sealingly and slidingly against the inner surface of the lid, the lid and the receptacle together defining the closed cavity. By displacing the closure lid away from the receptacle, eg by unscrewing the closure lid from the container, a reduced pressure may thus be created in the enclosed cavity defined between the receptacle and the closure lid, to create a suction effect.

The stopper portion of the receptacle may be provided with air inlet means for allowing air into the reservoir when the liquid is sucked through the conduit into the receptacle. The air inlet means may comprise at least one groove on the outer face of the side wall of the stopper, extending in a direction to place the reservoir in communication with the atmosphere, for allowing air into the reservoir.

In use, the liquid flow from the container to the receptacle may thus take place while the container is in an upright condition.

The conduit may comprise a tube passing through the transverse base wall of the receptacle, with an upper portion projecting operatively upwardly from the base wall and provided with at least one opening at or near an upper end thereof, and a lower portion terminating in a lower open end and projecting operatively downwardly from the base wall so that, in use, the upper portion projects into the receptacle and the lower portion projects into the container.

The flow prevention means may serve to prevent flow of liquid from the container through the conduit and into the receptacle when the liquid in the receptacle is being dispensed, eg when the container is tipped or inverted to dispense the measured volume of liquid from the receptacle. The flow prevention means may simultaneously prevent flow of liquid from the receptacle into the container, eg when the container is tipped to dispense the measured volume of liquid.

The flow prevention means may be provided by the conduit itself. Thus, the flow prevention means may comprise the lower portion of the tube, the lower end being located close to the base of the container so that, when the container is tipped to dispense the measured volume of liquid from the receptacle, the level of the liquid in the tipped container will be below the lower open end of the tube so that further flow of liquid from the reservoir through the tube will not occur.

The volume adjustment means may also be provided by the conduit itself, extending to a predetermined level into the receptacle. For example, the volume adjustment means may comprise the upper portion of the tube, the opening in the upper portion being located at a predetermined level above the base wall of the receptacle, so that the measured volume of liquid will be contained in the receptacle when it is filled with liquid up to the level of the opening. Excess liquid in the receptacle will, in use, run back into the reservoir through the conduit when the pressures in the receptacle and reservoir are equalised, until the level of liquid in the receptacle levels with the opening in the upper end of the conduit, when liquid flow back into the reservoir will stop. The volume of liquid remaining in the receptacle will be determined by the distance between the opening in the upper end of the conduit and the base of the receptacle. This distance can be varied in different embodiments of the invention, so that the volume of liquid remaining in the receptacle, and hence the volume of liquid dispensed from the receptacle can be varied. The distance can be made, for example, to correspond with a volume of 5 mℓ in the receptacle, this volume being a typical medicine measure.

The length of the upper portion of the tube may also be adjustable, so that the measured volumed may be adjusted, as required in different circumstances. The upper portion of the tube and/or the receptacle may advantageously be calibrated, to facilitate its adjustment.

The upper end of the conduit may be sealed and the conduit may be provided with at least one opening located below the sealed end of the conduit. This will serve to prevent or limit a fountain effect when liquid is sucked up through the conduit, thereby preventing or reducing the likelihood that liquid will strike and adhere to the inside of the lid of the dispensing device and affect the volume of liquid dispensed. The dispensing device will typically be used for dispensing a measured volume of a medicinal liquid from a medicine container such as a medicine bottle. In such a case the outlet of the container will be the neck of the bottle and the dispensing device will be inserted into the neck of the bottle.

According to another aspect of the invention there is provided a method for dispensing a measured volume of a liquid contained in a reservoir, the method comprising the steps of
providing a receptacle for receiving liquid from the reservoir;
providing a conduit to connect the reservoir with the receptacle;
establishing a pressure differential between the reservoir and the receptacle so as to force an unmeasured excess volume of the liquid from the reservoir via the conduit into the receptacle;
adjusting the volume of liquid in the receptacle to the required measured volume;
allowing the excess volume of liquid in the receptacle to return to the reservoir; and
preventing further flow of liquid between the reservoir and the receptacle when the measured volume is dispensed from the receptacle.

The invention will now be described by way of example with reference to the accompanying diagrammatic drawings in which
Figure 1 is a sectional side view of a dispensing device in accordance with the invention, the dispensing device being mounted on a bottle and shown in a closed state;
Figure 2 is a sectional side view of the dispensing device of Figure 1 but shown in a partly opened state;
Figure 3 is a side view of the dispensing device of Figure 1 in use.

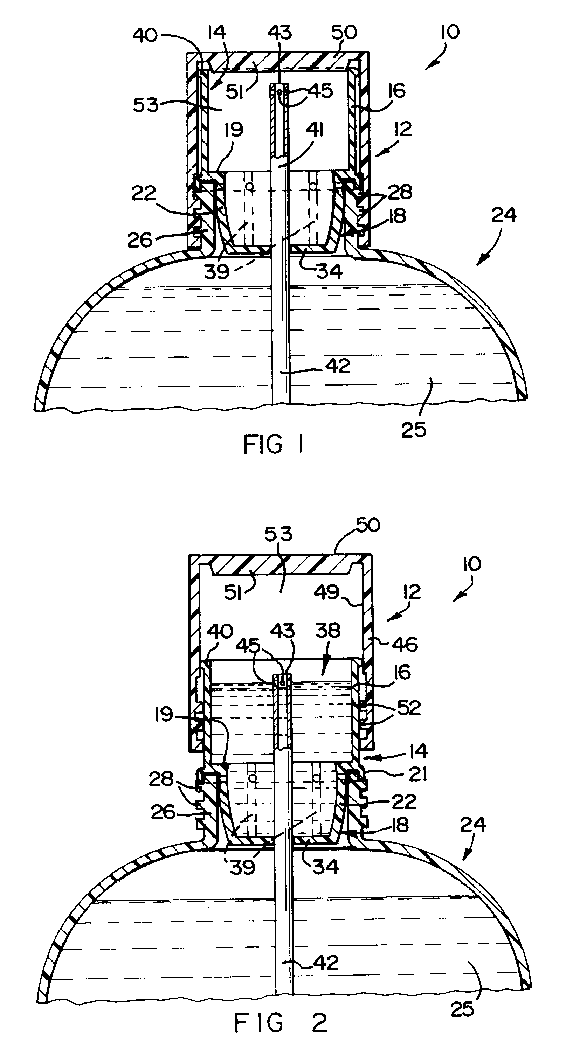

As shown in Figure 1 reference numeral 10 generally indicates an embodiment of a dispensing device in accordance with the invention. The device is referred to hereinafter as a dispenser.

The dispenser 10 comprises a closure element or lid generally indicated by reference numeral 12 and a receptacle generally indicated by reference numeral 14.

The receptacle 14 comprises two hollow cylindrical portions namely an upper hollow cylindrical portion 16 and a lower hollow generally cylindrical portion 18, together comprising the receptacle 14. The lower hollow portion 18 is designed to function also as a stopper, to close the outlet of the container as explained more fully below. The receptacle 14 has a generally cylindrical side wall 22 and a transverse base wall 34, and tapers towards the base wall 34, and the upper portion 16 is open at one end, having a mouth 38. The side wall 22 defining the stopper portion 18 bulges outwardly slightly as can be seen in the drawings. Inlet means for allowing air into the reservoir in the form of grooves 39 extend longitudinally along the side wall 22. A lip 40 surrounds the mouth 38 and is located sealing against the inner surface of the lid 12. The portions 16, 18 are linked by an annular linking member 19. An annular lip 21 surrounds the lower edge of the upper portion 16 and provides a sealing effect as is described in further detail below. The upper portion 16 has a larger diameter than the stopper portion 18. In use the stopper portion 18 is inserted into the neck of a container and acts as a stopper, as is also described in more detail below.

The dispenser 10 is shown in Figures 1 and 2 mounted on a reservoir in the form of a bottle 24 containing a liquid 25. The bottle has a neck 26 and a base 27. The neck 26 of the bottle 24 is provided with an external screw thread 28. The stopper portion 18 of the dispenser 10 fits snugly into the neck 26 of the bottle 24, the outwardly bulging side wall 22 acting as a gripping formation for impeding withdrawal of the dispensing device 10 from the bottle as is described in further detail below. A tear-off safety seal 30, of a plastics material, secures the receptacle 14 to the

A conduit in the form of a tube 42 passes through the base wall 34 of the receptacle 14 and extends upwardly into the receptacle 14 and downwardly into the bottle 24. The tube 42 has an upper end 43 and a lower open end 47. The upper end 43 is sealed and a number of small openings 45 are located just below the sealed upper end 43.

The lid 12 is cylindrical in shape having a cylindrical side wall 46 and an inner surface 49 and is closed at one end with a closure wall 50. A disc-shaped raised portion 51 on the inside of the closure member 50 fits snugly into the mouth 38 of the upper part 16 of the receptacle 14 as can be seen in Figure 1. A portion of the inner surface 49 of the side walls 46 is provided with a thread 52 complementary to the thread 28 on the neck of the bottle 24. The lid 12 fits over the receptacle 14, with the raised portion 51 fitting into the mouth 38, and the lip 40 providing a seal between the inner surface 49 of the side wall 46 and the receptacle 14. The base wall 34 and side wall 22 of the receptacle 14 and the side wall 46 and closure wall 50 of the lid 12 together define a cavity 53.

The dispenser 10 is made of a synthetic plastics material such as polyethylene. The bottle 24 may likewise be made of a synthetic plastics material. It is possible for the bottle 24 and the receptacle 14 to be integrally moulded.

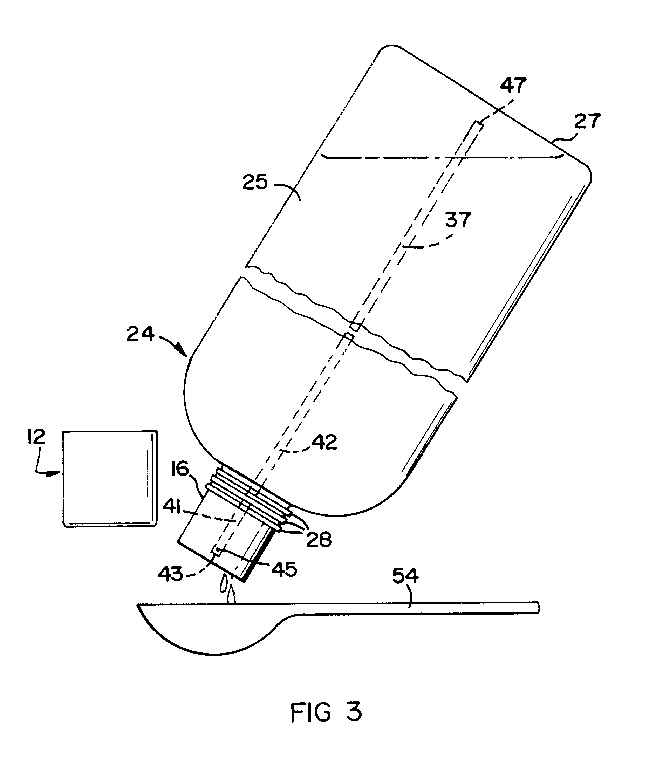

In use, the dispenser 10 is fitted to the bottle 24 by inserting the stopper portion 18 into the neck 26 of the bottle 24. The bulging portion of the side wall 22 serves to hinder withdrawal of the stopper portion 18 from the neck 26 of the bottle 24, the annular lip 21 providing an additional sealing effect between the stopper portion 18 and the neck 26 of the bottle. The lid 12 then fits sealingly over the receptacle 14 and is screw-threadedly held in position by the complementary threads 28 and 52 on the neck 26 and lid 12 respectively. The lip 40 provides a seal between the reservoir 14 and the inner surface 49 of the lid 12 as described above. The tube 42 projects downwardly into the liquid 25 in the bottle 24, with the lower end 47 of the tube 42 being located slightly above the base of the bottle 24 as can be seen in Figure 3.

In use, liquid 25 is drawn from the bottle 24 through the conduit 42 into the receptacle 14 by suction, in the following manner:

With the bottle 24 in a generally upright condition, the lid 12 is unscrewed and withdrawn from the receptacle 14. A negative pressure is created in the cavity 53 inside the receptacle 14 because of the seal between by the lip 40 and the inner surface 49 of the lid 12 and liquid 25 is sucked up through the tube 42 via the openings 45 into the receptacle 14, while air leaks into the bottle via the grooves 39 in the stopper portion 18 as is shown in Figure 2. The lid 12 is then removed and pressure is restored to the cavity 53. Excess liquid 25 which has been sucked into the receptacle 14 then flows back through the conduit 42 into the bottle 24 until the level of liquid in the receptacle 14 reaches the level of the apertures 45 located just below the upper end 43 of the conduit 42.

When the bottle 24 is tilted in order to dispense the liquid from the receptacle 14, for example into a spoon 54, the lower end of the conduit 42 protrudes from the liquid 25 remaining in the bottle 24 as can be seen in Figure 3 and no further liquid can flow through the conduit 42. In this way a measured volume of liquid may repeatedly be dispensed from the dispensing device 10. In a typical embodiment of the invention, the volume of liquid remaining in the receptacle 14 is 5 mℓ.

In another embodiment of the invention (not shown) the conduit 42 is slidably displaceable through an aperture in the base wall 34 and is calibrated, so that the distance between the apertures 45 of the conduit 42 and the base wall 34 is adjustable and hence the volume dispensed is adjustable.

The Applicant believes that the dispenser of the invention provides a simple and easy to operate method for dispensing a measured volume of a liquid such as a medicine from the bottle. The dispenser has, in addition, the safety feature that withdrawal of the device from the mouth of a medicine bottle is difficult because of the gripping formation provided on the stopper portion of the device.

## Claims

1. A dispensing device for dispensing a measured volume of liquid from a body of liquid (25) contained in a reservoir (24), characterised in that the device includes
a receptacle (14) for receiving an unmeasured excess volume of liquid from the body of liquid (25);
a conduit (42) to connect the reservoir (24) to the receptacle (14) to permit liquid to flow from the body of liquid (25) into the receptacle (14);
pressure differentiating means for creating a pressure differential between the reservoir (24) and the receptacle (14) to cause liquid to flow from the body of liquid (25) in the reservoir (24) to the receptacle (14);
volume adjustment means (41) which, in use, permits excess liquid to return to the reservoir (24), to adjust the unmeasured excess volume of liquid in the receptacle (14) to the measured volume;
whereby the measured volume of liquid may, in use, be dispensed from the receptacle.

2. A dispensing device as claimed in Claim 1, characterised in that it includes flow prevention means (37) for preventing flow of liquid (25) between the reservoir (24) and the receptacle (14) when the measured volume is dispensed from the receptacle (14).

3. A dispensing device as claimed in Claim 1 or Claim 2, characterised in that it is intended to be used with a reservoir (24) in the form of a bottle constituting a container for the liquid, the bottle having a wider base portion with a base (27), and a narrower neck portion with a neck (26) defining an outlet, the receptacle (14) being configured so that at least a portion of it forms a closure member in the form of a stopper (18), shaped for insertion into the neck (26) of the bottle to close off the outlet sealingly, with the conduit (42) interconnecting the container and the receptacle (14).

4. A dispensing device as claimed in Claim 3, characterised in that the stopper (18) is provided with at least one gripping formation for engagement with the neck of the bottle to impede withdrawal of the device once the stopper (18) has been inserted into the neck of the bottle.

5. A dispensing device as claimed in Claim 3 or Claim 4, characterised in that the receptacle (14) is cup-shaped having an operatively generally upwardly and outwardly extending side wall (22) with an outer surface, the wall defining a narrower lower portion, with a transverse base wall (34), and a wider upper portion (16) with an open upper end (38), the narrower lower portion forming the stopper (18).

6. A dispensing device as claimed in Claim 5, characterised in that a lid (12) is provided for closing off the open upper end (38) of the receptacle (14), the lid (12) being provided with engagement means (52) in the form of a screw thread for engagement with a complementary screw thread (28) provided on the neck of the bottle.

7. A dispensing device as claimed in Claim 6, characterised in that the pressure differentiating means is a pressure reduction means for reducing pressure inside the receptacle, the lid (12) of the receptacle (14) and the receptacle (14) together constituting the pressure reduction means, the lid (12) and the receptacle (14) being arranged in sealing relationship relative to one another to define between them a closed cavity (53), and being capable of relative displacement in a manner to enlarge the volume of said cavity (53) to cause a reduction of pressure in the said cavity (53).

8. A dispensing device as claimed in Claim 7, characterised in that the lid (12) is hollow, having a side wall (46) with an inner surface (49) and a transverse closure wall (50), and fits, in use, over the receptacle (14) so that at least a portion of the outer surface of the side wall (22) of the receptacle (14) abuts sealingly and slidingly against the inner surface (49) of the lid (12), thereby forming a seal, the base wall (34) and side wall (22) of the receptacle (14) and the side wall (46) and closure wall (50) of the lid (12) together defining the cavity (53) so that displacement of the lid (12) away from the receptacle (14) will increase the volume of the cavity (53) and reduce the pressure in the receptacle (14), the stopper (18) being provided with air inlet means comprising at least one groove (39) on the outer face of the side wall (22) of the stopper (18) and extending in a direction to place the reservoir in communication with the atmosphere, for allowing air into the reservoir (24).

9. A dispensing device as claimed in Claim 8, characterised in that the conduit (42) comprises a tube passing through the transverse base wall (34) of the receptacle (14), with an upper portion (41) projecting operatively upwardly from the base wall (34) and provided with at least one opening (45), at or near an upper end (43) thereof, and a lower portion (37) terminating in a lower open end (47), and projecting operatively downwardly from the base wall (34) so that, in use, the upper portion (41) projects into the receptacle (14) and the lower portion (37) projects into the container (24), the flow prevention means comprising the lower portion (37) of the tube, the lower end (47) being located close to the base (27) of the container (24) so that, when the container (24) is tipped to dispense the measured volume of liquid from the receptacle (14), the level of the liquid (25) in the tipped container (24) will be below the lower open end (47) of the tube so that further flow of liquid (25) from the reservoir through the tube will not occur.

10. A dispensing device as claimed in Claim 9, characterised in that the volume adjustment means comprises the upper portion (41) of the tube, the opening (45) in the upper portion (41) being located at a predetermined level above the base wall (34) of the receptacle (14), so that the measured volume of liquid will be contained in the receptacle (14) when it is filled with liquid up to the level of the opening (45), any excess liquid in the receptacle, in use, running back into the reservoir (24) through the conduit (42) when the pressures in the receptacle (14) and reservoir (24) are equalised.

11. A dispensing device as claimed in Claim 10 characterised in that the length of the upper portion (41) of the tube is adjustable and, optionally, calibrated, and in which the upper end (43) of the conduit (42) is closed and the at least one opening (45) is provided below the closed end (43) of the conduit.

12. A method for dispensing a measured volume of a liquid (25) contained in a reservoir (24), characterised in that the method comprises the steps of
providing a receptacle (14) for receiving liquid (25) from the reservoir (24);
providing a conduit (42) to connect the reservoir (24) with the receptacle (14);
establishing a pressure differential between the reservoir (24) and the receptacle (14) so as to force an unmeasured excess volume of the liquid (25) from the reservoir (24) via the conduit (42) into the receptacle (14);
adjusting the volume of liquid in the receptacle (14) to the required measured volume;
allowing the excess volume of liquid in the receptacle (14) to return to the reservoir (24); and
preventing further flow of liquid (25) between the reservoir (24) and the receptacle (14) when the measured volume is dispensed from the receptacle (14).
